# EUROPEAN PATENT APPLICATION

(11) **EP 1 262 895 A2**
(43) Date of publication of application: **04.12.2002**
(21) Application number: 02253734.4
(22) Date of filing: 28.05.2002
(51) Int. Cl.: G06F 17/60

(54) **System, method, program and storage medium for requesting over a network, jobs for repair or recycling of apparatuses**

(30) Priority: 29.05.2001 JP 2001160919
(71) Applicant: CANON KABUSHIKI KAISHA, Tokyo (JP)
(72) Inventor: Ono, Yasuhiko, c/o Canon Kabushiki Kaisha, Tokyo (JP); Mori, Hiromi, c/o Canon Kabushiki Kaisha, Tokyo (JP)
(74) Representative: Beresford, Keith Denis Lewis

(57) **Abstract**

An information processing apparatus for requesting a predetermined job to be done for an apparatus in use via a network, the apparatus comprising a specifying unit for specifying the apparatus in use and the predetermined job to be done for the apparatus in use, a search unit for searching for a job request destination corresponding to the apparatus in use and the predetermined job specified by the specifying unit, and a transmitter for transmitting job request information corresponding to the apparatus in use and the predetermined job specified by the specifying unit to the job request destination found by the search unit.

## Description

### FIELD OF THE INVENTION

The present invention relates to an information processing apparatus for requesting a job for an apparatus in use, a method, and a program and, more particularly, to a user interface used to manage the apparatus in use and to issue a recovery job request.

### BACKGROUND OF THE INVENTION

In order to repair and maintain an apparatus that the user purchases and uses, the user must manage and preserve an instruction manual attached to the apparatus, and must look it up as needed. Furthermore, when the user wants an unneeded apparatus to be recovered, or wants to recycle an expendable, he or she must request a recovery center in his or her inhabited area via phone or FAX to recover the apparatus, or must bring the apparatus or expendable to the recovery center.

In this case, since each manufacturer operates a recycle factory associated with the recovery center, the recycle factory does not support recycling of apparatuses or used expendables of other manufacturers, and the user must go to a recovery center of the corresponding manufacturer, thus imposing a heavy load. As a result, the recovery rate of unneeded apparatuses and used expendables is reduced.

In this manner, in the conventional recovery/recycle system, since the user must search out and contact a recovery agent, most of used apparatuses are disposed as wastes because the user cannot find the contact address of an appropriate recovery service agent or it is troublesome to do so.

Japanese Patent Laid-Open No. 11-070378 discloses a mechanism that automatically determines whether home appliances such as air conditioners, refrigerators, and the like are disposed or re-used, instead of bothering the user to make this determination, and can request a job based on the determination result.

However, in practice, the user often uses products corresponding to a number of different of manufacturers. Especially, when a retailer, recovery agent, and repair agent correspond to a manufacturer, the user must search for a contact corresponding to that manufacturer, resulting in a heavy load on the user. On the other hand, as for products corresponding to different responsible sources irrespective of their manufacturers, the user must check the responsible source of each individual product, resulting in a heavy load on the user. Such problem is not confronted by Japanese Patent Laid-Open No. 11-070378.

### SUMMARY OF THE INVENTION

The present invention was conceived in order to solve the aforementioned problems individually or combined all together. More specifically, it is a concern of the present invention to reduce the load on the user upon requesting recovery, repair, and recycle. It is another object of the present invention to motivate the user to request recovery by providing the user with merits upon recovery, repair, and recycle.

According to an aspect of the present invention there is provided an information processing apparatus for requesting a predetermined job to be done for an apparatus in use via a network, the apparatus comprising a specifying unit for specifying the apparatus in use and the predetermined job to be done for the apparatus in use, a search unit for searching for a job request destination corresponding to the apparatus in use and the predetermined job specified by the specifying unit, and a transmitter for transmitting job request information corresponding to the apparatus in use and the predetermined job specified by the specifying unit to the job request destination found by the search unit.

According to another aspect of the present invention there is provided an information processing apparatus for requesting a predetermined job to be done for an apparatus in use via a network, the apparatus comprising, a display controller for controlling a display unit to display information associated with the apparatus in use, a first selector for selecting the information displayed by the display controller, a second selector for selecting the predetermined job to be done for an apparatus associated with the information selected by the first selector, a job request information generator for generating job request information by associating the apparatus associated with the information selected by the first selector and the predetermined job selected by the second selector, and a transmitter for transmitting the job request information to an external server which can communicate via a predetermined communication line.

According to a further aspect of the present invention there is provided a job request receiving apparatus for receiving job requests of apparatuses in use corresponding to a plurality of manufacturers, the apparatus comprising a receiver for receiving product information and job identification information that can identify a type of job from a terminal which can communicate via a predetermined communication line, a specifying unit for specifying a job request destination on the basis of the product information and job identification information received by the receiver, and a transmitter for transmitting job request information to the job request destination specified by the specifying unit.

According to yet another aspect of the present invention there is provided an information processing apparatus comprising a display controller for controlling a display unit to display information used to select an apparatus in use, and information used to select a job to be done for the apparatus, and a transmitter for transmitting information indicating the apparatus in use and job selected using the information to a predetermined destination.

Other features and advantages of the present invention will be apparent from the following descriptions taken in conjunction with the accompanying drawings, in which like reference characters designate the same or similar parts throughout the figures thereof.

### BRIEF DESCRIPTION OF THE INVENTION

The invention will be better understood and its numerous objects and advantages will become more apparent to those skilled in the art by reference to the following drawings, in conjunction with the accompanying specification, in which:
Fig. 1 is a schematic view showing the flow of a job request procedure in the present invention;
Fig. 2 is a view showing the correspondence among terminals in a first embodiment of the present invention;
Fig. 3 is a view showing the correspondence among terminals in a second embodiment of the present invention;
Fig. 4 is a chart showing the flow of a job request process in the first embodiment of the present invention;
Fig. 5 is a chart showing the flow of a job request process in the second embodiment of the present invention;
Fig. 6 shows an example of the formats of a product database and user database in an embodiment of the present invention;
Fig. 7 shows an example of the format of a management database in an embodiment of the present invention;
Fig. 8 is a flow chart showing a registration process of apparatus information in a terminal in an embodiment of the present invention;
Fig. 9 is a flow chart of a job request process in an embodiment of the present invention;
Fig. 10 shows a display format in an embodiment of the present invention;
Fig. 11 shows a display format in an embodiment of the present invention;
Fig. 12 shows a display format of an apparatus management system;
Fig. 13 shows a format of a recycle request window;
Fig. 14 is a diagram showing the arrangement of a terminal in the present invention;
Fig. 15 is a schematic view showing a conventional repair/recycle request pattern;
Fig. 16 is a block diagram corresponding to a third embodiment of the present invention;
Fig. 17 is a diagram of a user terminal network corresponding to the third embodiment of the present invention;
Fig. 18 is a typical block diagram of an image forming apparatus;
Fig. 19 is a flow chart showing the process of a user terminal of the present invention; and
Fig. 20 is a flow chart showing the process of a management server (job request receiving apparatus) of the present invention.

### DETAILED DESCRIPTION OF EMBODIMENTS

Preferred embodiments of the present invention will be described in detail in accordance with the accompanying drawings.

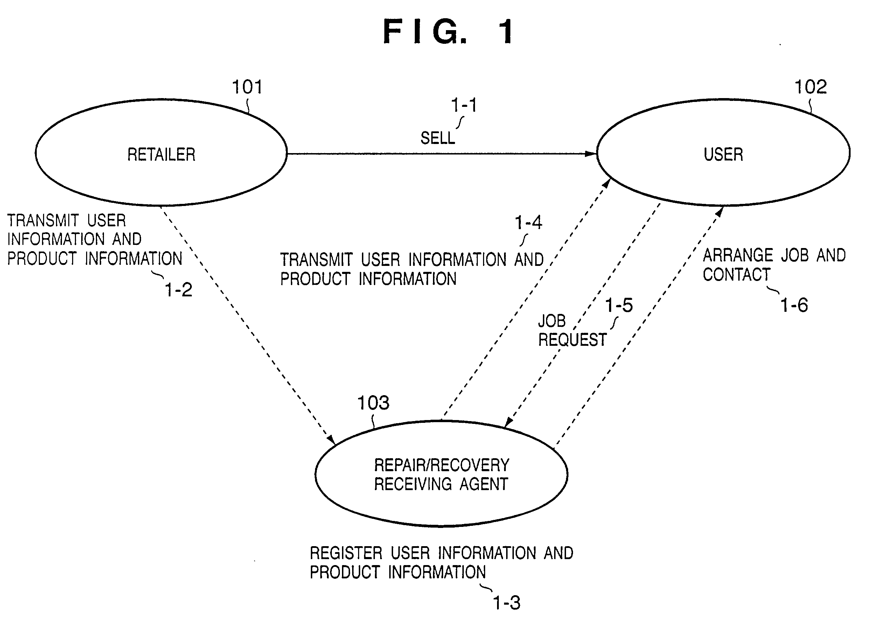

Fig. 1 is a schematic view in an embodiment of the present invention. Referring to Fig. 1, reference numeral 101 denotes a retailer; 102, a user; and 103, a repair/recovery receiving agent (to be simply referred to as an agent hereinafter). The retailer 101 sells a specific apparatus to the user 102 (1-1). The apparatus includes home appliances such as a television, video deck, tuner, washing machine, refrigerator, and the like, information communication apparatuses such as a personal computer, printer, facsimile, copying machine, scanner, and the like, and other repairable/recyclable apparatuses. In this case, the user 102 registers user information at the retailer 101. The retailer 101 transmits the user information and apparatus information to the agent as an e-mail message (1-2). The agent 103 registers the received information (1-3), and transmits the registered information to the user 102 for the purpose of confirmation (1-4). When the user wants to repair or recycle the apparatus during the subsequent use of the apparatus, he or she issues a job request such as repair or the like to the agent 103 (1-5). In response to this request, the agent 103 arranges a job based on the registered information and transmits the arranged contents to the user 102 (1-6). When the present invention is used in the series of repair/recovery request processes, the load on the user 102 can be greatly reduced. Embodiments of the present invention will be described in detail hereinafter with reference to the accompanying drawings.

In the following description of embodiments, the term "expendable" may be replaced by the term "consumable" to refer a toner cartridge used in an image forming apparatus. The term "recovery" may be replaced as suitable by the term "collection" with respect to the collection of the consumed toner cartridges and a term "retailer" may be replaced by the term "reseller" in certain sales formats.

### [Embodiment of First Invention]

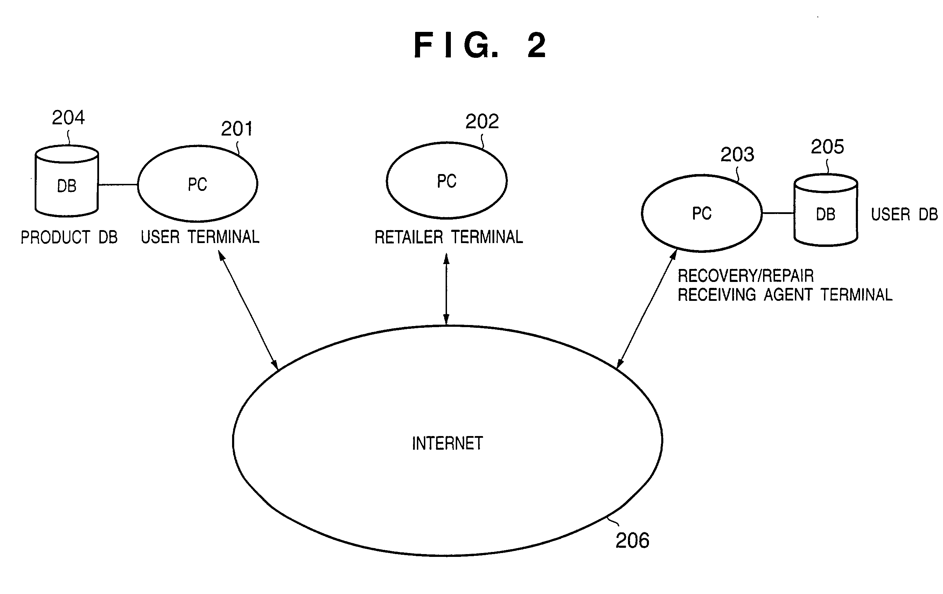

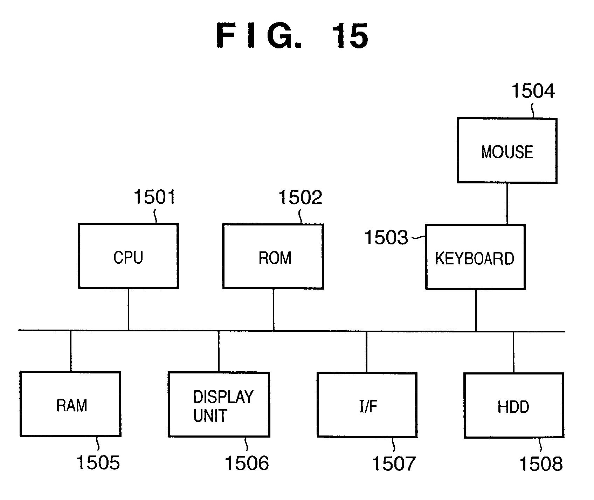

Fig. 1 shows the tripartite relationship. However, in practice, as shown in Fig. 2, the user 102, retailer 101, and agent 103 respectively have terminals 201, 202, and 203, which are connected to the Internet that uses a public network or a dedicated line (206), and can exchange information using e-mail messages and the like. In Fig. 2, only one agent terminal 203 is connected for the sake of simplicity. However, in practice, agent terminals of a plurality of manufacturers, which contract to recover/repair corresponding apparatuses, are connected. Fig. 15 shows the typical arrangement of the information processing apparatus, i.e., the arrangement of each terminal. Each terminal comprises a CPU 1501, ROM 1502, keyboard 1503, mouse 1504, RAM 1505, display unit 1506, interface 1507, and HDD 1508.

The user 102 manages data of apparatuses that he or she uses on a product database 204 of his or her terminal 201. Details of the product database 204 will be explained later. The agent terminal 203 includes a user database 205, which manages information of users. Details of the user database 205 will also be explained later. Therefore, in the arrangement shown in Fig. 2, data are managed by terminals of users who require that data.

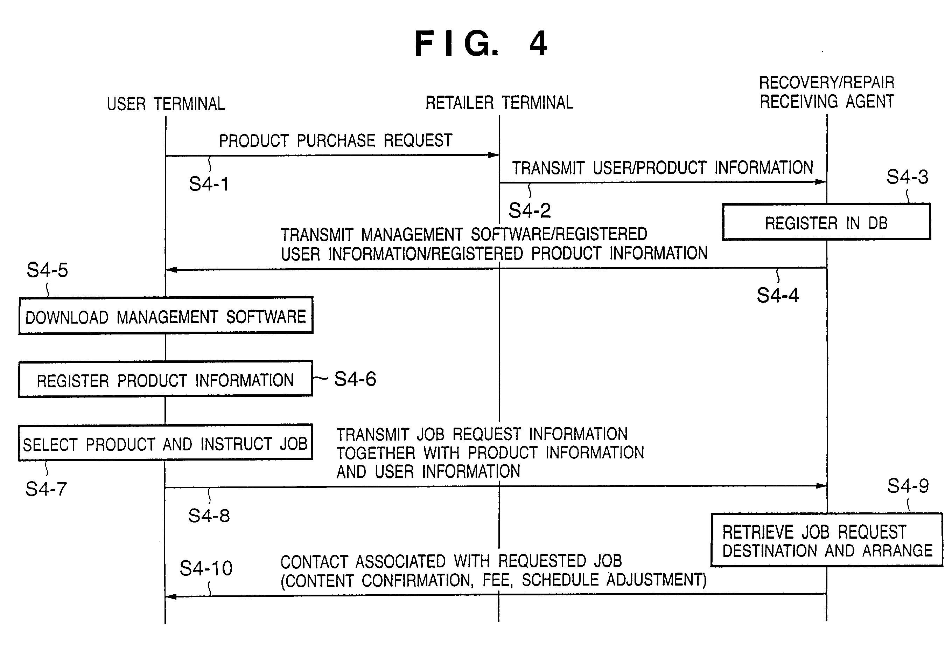

Fig. 4 is a chart time-serially showing the flow of a repair/recovery request process in the present invention, i.e., the flow of processes done among the user terminal, retailer terminal, and terminal used by the recovery/repair receiving agent. Assume that each terminal has the same arrangement as that shown in Fig. 15 described above. Also, the processes in respective steps shown in Fig. 4 are implemented when CPUs provided to respective terminals execute processes based on program codes stored in storage media. The flow of the process in the present invention will be described in detail below using Figs. 2 and 4.

Initially, the user 102 who wants to purchase a specific apparatus transmits purchase request information of the apparatus to the retailer terminal 202 of the retailer 101 via a communication line (206) such as the Internet or the like (S4-1).

In this case, the user registers data required to register himself or herself in the retailer terminal 202. The data required in this case include, e.g., the name, address, and mail address of the user, the model that the user wants to purchase, manufacturer identification information, and the like. However, the present invention is not limited to such specific data as long as they can specify the user and product (model, manufacturer, and the like). The data registered in the retailer terminal are transferred from the retailer terminal 202 to the agent terminal 203 (S4-2), and are registered in the user database 205 of the recovery/repair receiving agent (job receiving agent) (S4-3).

The agent transmits the registered user information and registered apparatus information to the user 102 based on the data registered in the user database 205 (S4-4). In this case, the agent may transmit management software together. These data can be sent using an e-mail message. In another aspect of the present invention, S4-4 may be processed by the retailer terminal.

The user can install the management software appended to the received mail message to his or her terminal. Even when no management software is appended, the user can download the management software from a dedicated home page provided by the agent or the like (S4-5). In this case, the mail message sent by the process in S4-4 describes the URL of the dedicated home page, and the user clicks that URL to access the home page and to download the management software.

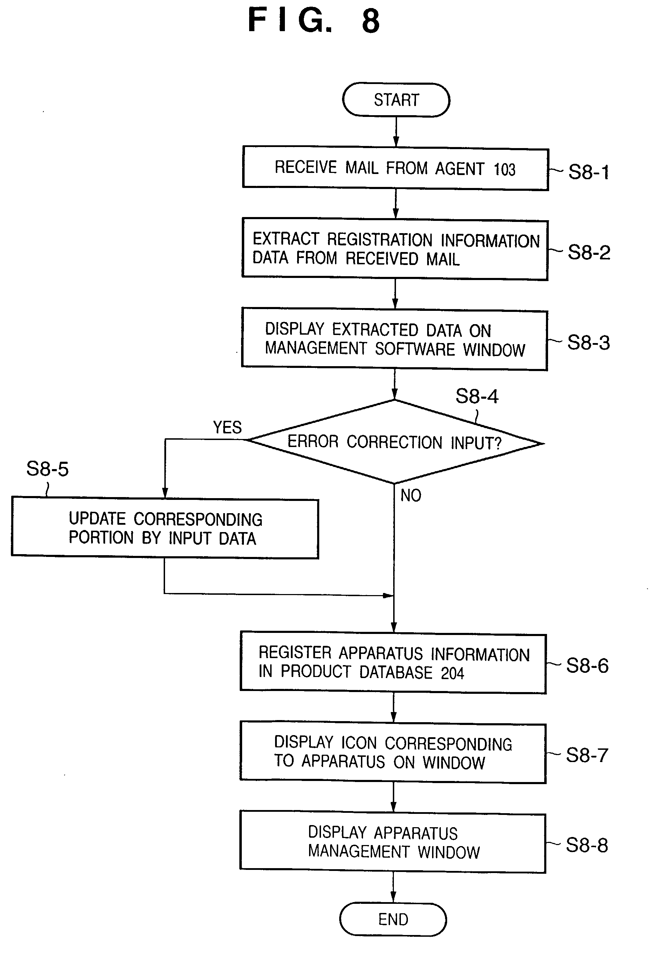

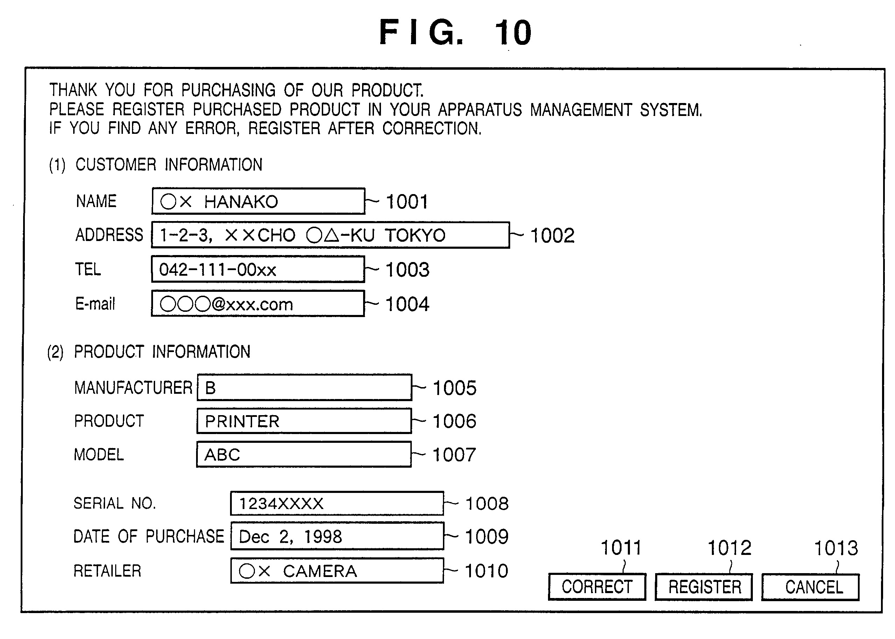

In the user terminal 201 (corresponding to a user terminal device), registration (storage in a storage unit) is made based on externally received registration information in accordance with an installation instruction of predetermined software of the user (S4-6). As an example of the registration process, the management software is launched, and the user can confirm and register his or her registered information based on data sent from the agent on the window of the management software. More specifically, when the management software loads the data received via the mail message from the agent, it displays a window shown in Fig. 10, and the user 102 can confirm his or her registered information. Fig. 8 shows the flow of a registered information confirmation process as the processing flow chart in the terminal.

Fig. 8 shows the process in the user terminal 201, which is implemented when the CPU 1501 in Fig. 15 described above reads a program code stored in a nonvolatile storage media such as the ROM 1502, HDD 1508, or the like, and executes processes based on the read program code.

The user terminal 201 receives a mail message sent from the agent 103 (S8-1), and extracts appended registered information data by a function of extracting required data of the management software (S8-2). The extracted registered information data is mapped to display user/apparatus information on the management software (S8-3). The user 102 confirms the displayed data, and if he or she finds any error, he or she clicks a correction button (1011) to launch a correction window and correct the error. If the user has made a correction input (Yes in S8-4), the display data is updated by the corrected input information (S8-5). Upon completion of the correction unit, the previous registration window is displayed, and after the user confirms the registered information, he or she clicks a registration button (1012).

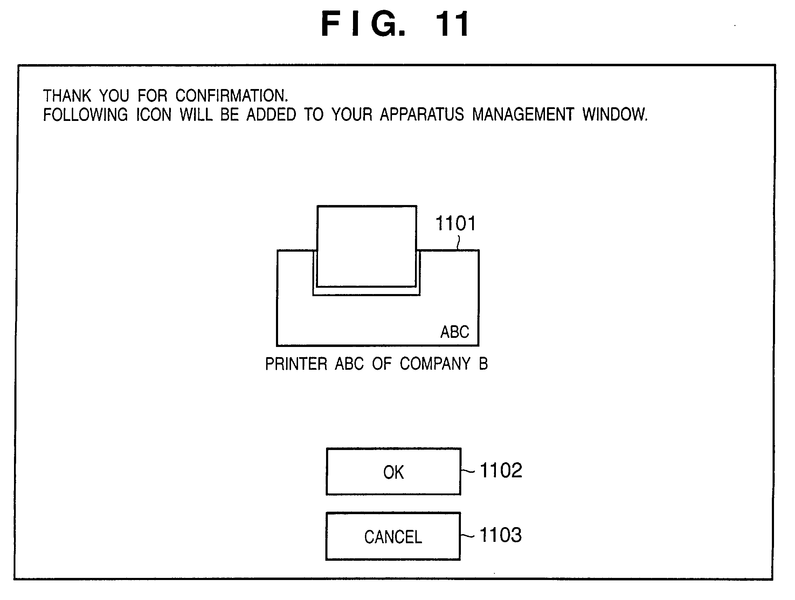

In this manner, the user information and apparatus information are registered in the user terminal 201 (S8-6). Since the registered apparatus is displayed as a specific icon on the management software, an icon display window is displayed upon completion of the registration process (S8-7). More specifically, an icon shown in Fig. 11 is displayed. This icon corresponds to a display result when printer ABC of company B is registered. If the icon matches the registered apparatus, the user clicks an OK button (1102), and an apparatus management window is displayed (S8-8). If the icon does not match the registered apparatus, the user clicks a CANCEL button (1103) to display the previous window (the process in S8-3), and executes the registration process again.

If correction is made, the user 102 may transmit a mail message that describes a corrected item to the agent, or the management software may record a correction history and may automatically transmit a mail message to the agent 103. In this manner, the user information in the terminal that the repair agent, recycle agent, and the like use can be managed more accurately.

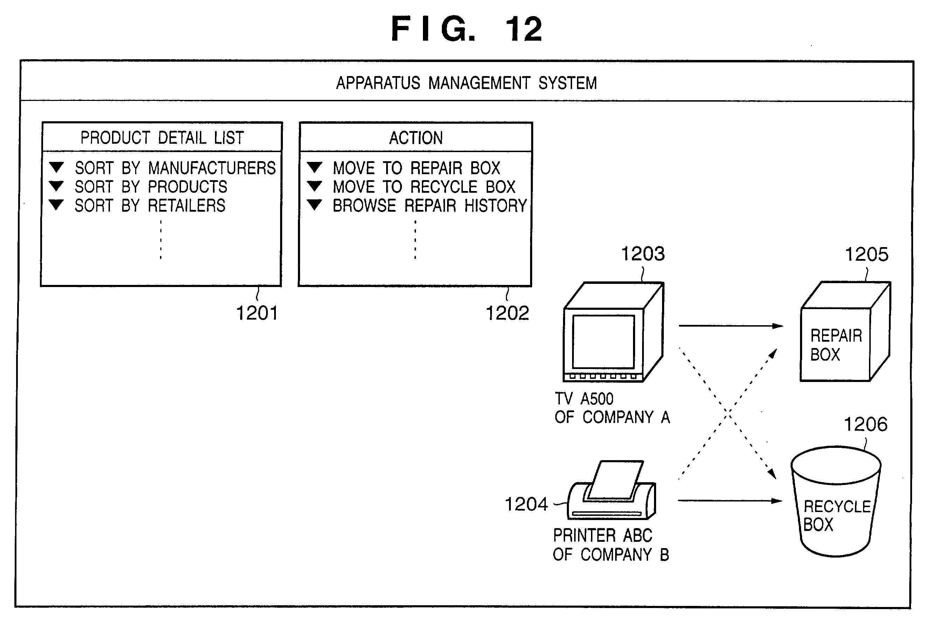

Upon completion of registration of the apparatus, the apparatus management window shown in Fig. 12 is displayed (S8-8). On this window, registered apparatuses can be identified by corresponding icons. As can be seen from Fig. 12, printer ABC of company B and television A500 of company A are managed. Note that the registered information is stored in and managed by the product database 204 of the user terminal 201. In this way, with the mechanism of the present invention, apparatuses of various manufacturers or retailers can be simultaneously displayed on the display unit of the terminal that the user 102 uses to facilitate management of those apparatuses. When the user 102 wants to request recovery, repair, or the like of an apparatus that he or she uses, a job request can be issued regardless of its manufacturer.

In the above example of the apparatus management method, apparatuses are managed using icons. However, the present invention is not limited to such specific method. For example, a list table that shows apparatus names and information associated with apparatuses may be displayed on the window upon management. Furthermore, any other apparatus management methods can be applied as long as they can provide the same effects.

Also, the registration process (Fig. 8) of the registered information in the product database 204 is merely an example, and the present invention is not limited to the method using the management software. For example, when the user opens a mail message sent from the agent 103, registered information may be automatically stored in the user's product database 204. In addition, any other methods can be applied as long as they are used to store and manage registered information in a database. For example, the user may input all items required for registration to the terminal via the keyboard or the like.

The user 102 uses the apparatuses after the registration process. Along with an elapse of time, the apparatus may fail and require repair, or may be recycled upon replacement with a new apparatus. In such case, the user selects an objective apparatus using the management software, selects a repair/recovery job or the like, and then contacts the agent (S4-7, S4-8). This sequence will be described in detail below.

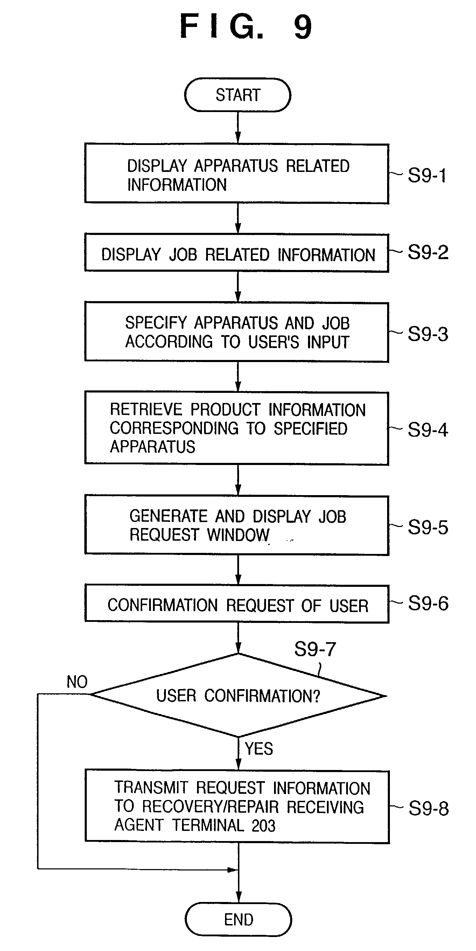

Fig. 9 is a flow chart of the terminal process associated with a job request in the user terminal 201. A program corresponding to this flow chart is stored in, e.g., the HDD 1508 of the user terminal, and is read out by the CPU 1501 upon executing the process. The apparatus management window (that which is displayed on the display unit of the user terminal 201) displays icons corresponding to apparatuses (S9-1). The user 102 can select an icon corresponding to an apparatus to be processed from the displayed icons, and the icon selected in accordance with an instruction of the user 102 is recognized by the user terminal 102. In order to display apparatus icons on the window, the user 102 selects a menu item corresponding to the apparatus from a product detail list menu 1201, and the user terminal 201 displays icons of all apparatuses corresponding to the selected menu item. Hence, the user 102 can select a desired apparatus from the displayed icons. In this case, the menu 1201 can include an item corresponding to a specific period of manufacturing dates or specific manufacturer.

As another aspect of the present invention, icons indicating all apparatuses registered in the user terminal 201 may be displayed, and a user's select instruction using a pointing device such as a mouse or the like may be recognized to specify the selected icon indicating a given apparatus, and a predetermined action (job request) may be associated with the specified apparatus from an action menu 1202 in Fig. 12. When a predetermined menu item is selected from the product list menu 1201 in Fig. 12, all displayed icons may be sorted in accordance with the selected predetermined menu item.

The user 102 then selects desired job contents from the action menu 1202, and the user terminal 201 recognizes the apparatus (icon) of user's choice in accordance with instruction input information. A job corresponding to the menu item selected by the user 102 is displayed as an icon on the window (S9-2). More specifically, when the user wants to issue a repair request, an icon "repair box" is displayed; when the user wants to recycle, an icon "recycle box" is displayed. The management software records a history of processes executed so far, and the user 102 can refer to the repair history of a given apparatus if he or she selects a history menu.

As another aspect, icons indicating all registered apparatuses may be displayed on the display unit in advance, as indicated by 1205 and 1206 in Fig. 12, and the user may select an arbitrary one of the displayed icon as a candidate.

Note that the display state shown in Fig. 12 is an example, and a display state which is easy to understand for the user is provided as needed. Furthermore, the icons to be displayed are not limited to "repair box" and "recycle box", and icons indicating various job requests such as "make agent buy off as secondhand article" and the like.

A process executed when the user actually requests repair or recycle will be explained below. If television A500 of company A breaks down, the user 102 need only drag the icon of that television and drop it onto the icon "repair box" to issue its repair request. Note that drag & drop indicates that the user presses a mouse button on a GUI object such as an icon or the like, moves the mouse cursor to an arbitrary location while holding down the button, and then releases the mouse button, i.e., that the user grabs a GUI object using the mouse (by pressing the mouse button), drags the object (by moving the mouse while holding down the button), and releases the object (by releasing the mouse button). In a practical process of the terminal, when an input is made by the mouse button while the coordinate position of a cursor indicated by the mouse 1504 overlaps a desired icon, a first icon is specified.

A move command of the cursor is input to the terminal main body while the input is kept made by the mouse button, and a second icon is specified in accordance with the new coordinate position indicated by the cursor. When a release command of the mouse button input is input to the terminal main body, the first and second icons are associated with each other and, after that, a predetermined process is executed. Assume that the first and second icons respectively correspond to ones for specifying an apparatus and job, respectively, but may be vice versa. Likewise, a printer recycle request can be issued by dragging and dropping the printer icon onto the icon "recycle box". That is, according to this embodiment, an apparatus and its job request (repair, recovery, or the like) can be easily selected and issued using an interface using icons. However, the drag & drop request process is an example on the user interface. For example, the user may select an icon, and then select a predetermined menu item (job) from a menu bar (1202) for the selected icon, thereby generating request information corresponding to the icon and selected menu item (job). Also, the object of the present invention can be achieved when the user fills required items (product information for specifying an apparatus and information for specifying a job) in a request template of an e-mail message. That is, any other methods/mechanism can be applied to the present invention as long as they can associate an apparatus with a request job on the user interface.

After the user has made an input operation for associating an apparatus and job contents to be requested, the apparatus and job to be processed in the terminal are specified from a plurality of ones (S9-3). In the user terminal 201, the product database 204 is searched for product information corresponding to the specified apparatus, and job request information is generated on the basis of the specified apparatus and job contents and the found product information (S9-4).

The search result is applied to window data corresponding to the specified job to generate and display a job request window (S9-5).

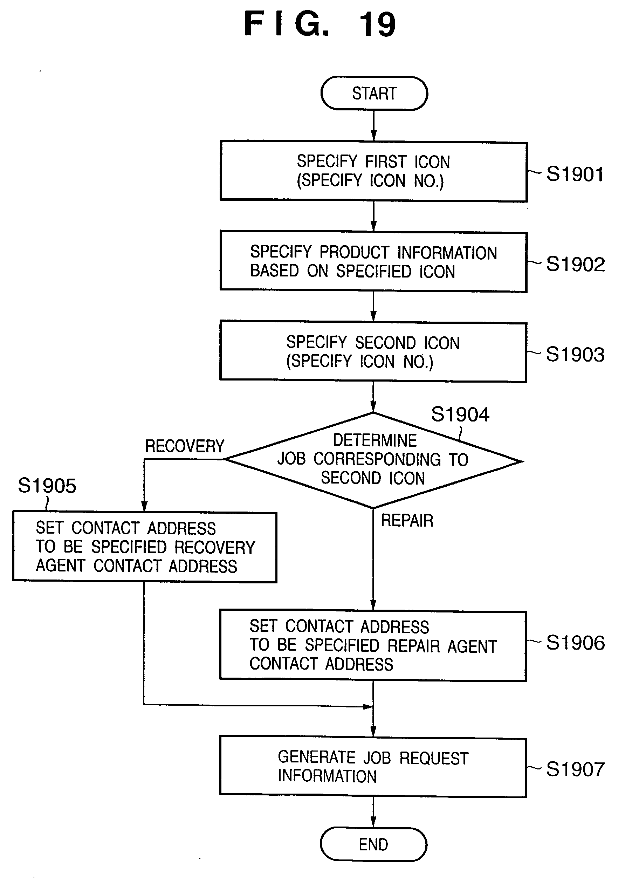

Details in steps S9-3 and S9-4 will be explained below using Fig. 19. The process shown in Fig. 19 is implemented when the CPU in the information processing apparatus executes a process based on a program code stored in a nonvolatile storage media (ROM, HDD, or the like).

In step S1901, a first icon (indication used to specify an apparatus) is selected, and the terminal recognizes an icon number corresponding to the selected icon.

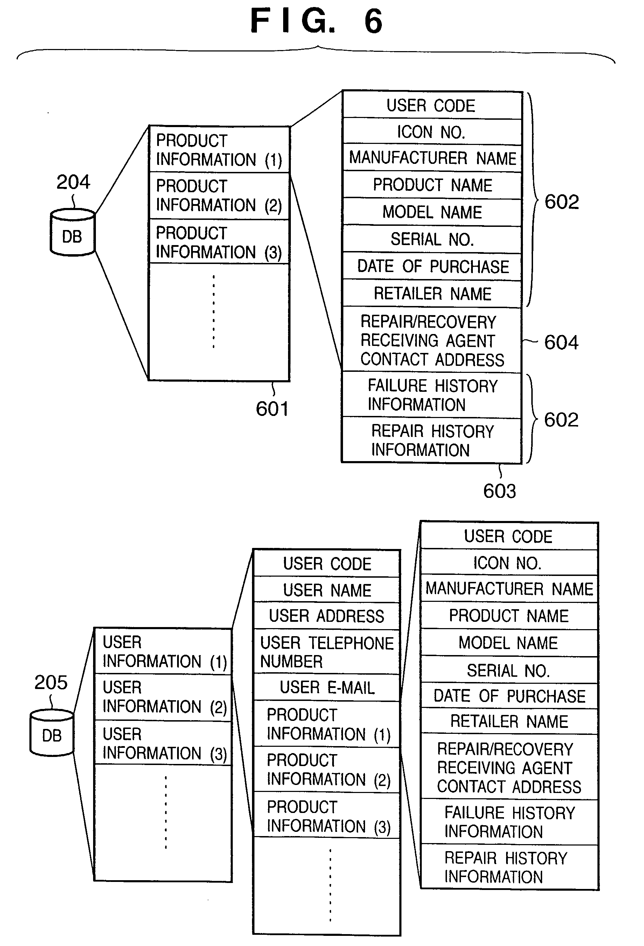

In step S1902, a DB (e.g., a DB 204 in Fig. 6) is searched using the icon No. specified in step S1901 to specify product information to find (retrieve) and specify product information that contains model information, manufacturer, and the like corresponding to the icon No. from information 603 of the product DB in Fig. 6. Note that the icon No. in the present invention indicates an icon identification number corresponding to an icon selected according to a user's instruction. If an object to be selected according to a user's instruction is not an icon, the icon No. corresponds to information which can specify the object selected according to the user's instruction.

In step S1903, a second icon (an icon indicating a predetermined job) is selected by the aforementioned mechanism, and is specified by the terminal. In this case, a table that stores the specified icon No. (icon specifying information) and a predetermined job in association with each other as follows:
Icon No. AAA: recovery job
Icon No. BBB: repair job
is stored in the DB 204 of the user terminal 201. In practice, the user terminal 201 specifies a predetermined job from the second icon using this table.

In step S1904, the contents of the job specified in step S1903 are determined. That is, the type of job is specified. In Fig. 19, it is checked if a recovery or repair job is designated.

If it is determined in step S1904 that a recovery job is designated, the contact address of the recovery agent is specified on the basis of the product information (e.g., model, product serial No., manufacturer, retailer name, and the like) specified in step S1902 and the recovery job information in step S1905. For example, the manufacturer is specified based on the product information, and if the request job contents are a recovery job, a recovery agent associated with the specified manufacturer is specified. Such information is specified based on data 603 in the product DB 204 in Fig. 6. In the present invention, the product information in step S1905 is minimum required information used to specify a job request destination by the information processing apparatus, and for example, product information may contain only information indicating the manufacturer, model information, serial number, or retailer in correspondence with an icon.

On the other hand, if it is determined in step S1904 that a repair job is designated, the contact address of a repair agent is specified from the DB 204 on the basis of the product information specified in step S1902 and the repair job information.

Of course, the process in step S1904 is not limited to "recovery" and "repair", and various other jobs, e.g., "sales", "secondhand purchase", and the like are also possible. The contact address of each job request destination is stored in a field 604 in Fig. 6.

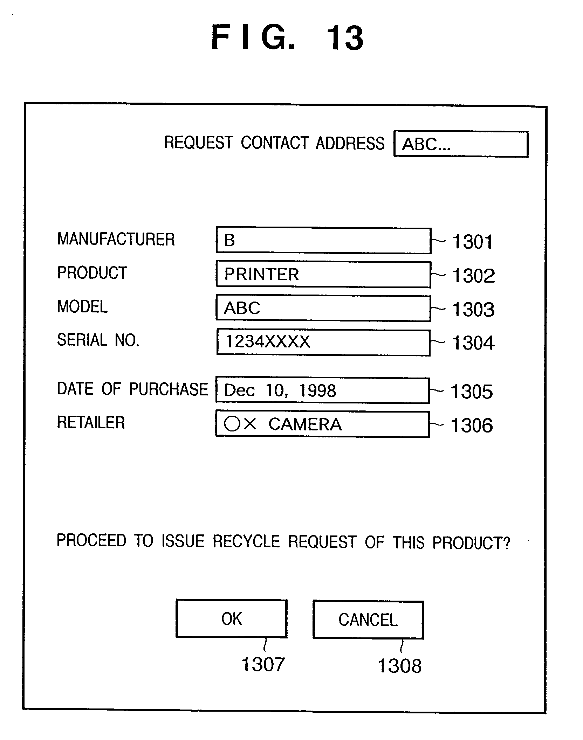

Referring back to Fig. 9, a recycle (repair) request window shown in Fig. 13 is displayed as a result of the process in S9-4. This window displays information associated with the objective apparatus, e.g., the manufacturer, product, serial number, and the like (S9-6). The user then confirms if the displayed contents are OK. If the user agrees with the displayed information and wants to request recycle (repair), he or she clicks an OK button; otherwise, he or she clicks a CANCEL button.

In place of the display state shown in Fig. 13, a dialog box that includes only a question "proceed to issue product recycle request?" or "proceed to issue product repair request?", and indications used to instruct "OK" or "CANCEL" may be displayed.

If the user terminal 201 recognizes that the user has clicked the OK button, it transmits the job request information to the recovery/repair receiving agent terminal 203 in Fig. 2 together with the product information and user information (S9-8); if the user has clicked the CANCEL button, the processing ends (a process corresponding to NO in S9-7).

Note that the product information is required to specify a product and includes, e.g., all kinds of information that can specify a product such as a serial number, a pair of retailer name and model name, and the like. However, the present invention is not limited to such information. When agent information has been changed, the user terminal 201 that the user 102 uses is notified of updated information.

This notification method is implemented when the agent terminal that the agent (who contracts for recovery or repair) uses transmits an mail message. More specifically, an e-mail message that describes the URL of a page where the user can download a change message is sent to the user terminal 201, and the user can easily acquire updated information.

In the first embodiment, upon receiving the job request, the agent 103 (corresponding to the recovery/repair receiving agent terminal 203 in Fig. 2) carries out the job by itself. When the agent further asks another agent for that job, a recycle (repair) base is selected on the basis of the address data of the user 102 in the request contents (S4-9). In either case, job reception data indicating that the job is received is generated, and is sent back to the user 102 via an e-mail message (S4-10).

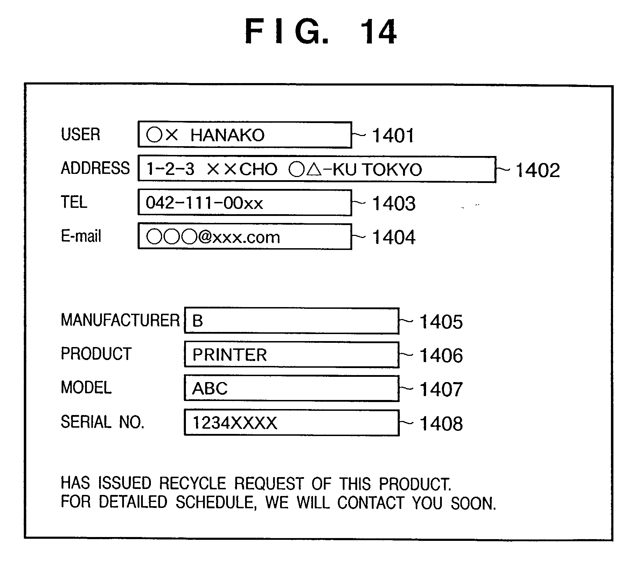

Fig. 14 shows a window of the management software, which is displayed based on data sent back from the agent 103. This window displays information which specifies the user 102 as the request source, and information of the apparatus to be processed, and the user 102 can confirm if the request is accurately carried out.

Also, the job reception mail message from the agent 103 may contain additional information such as information of a job execution date, fee information, and the like in addition to the content confirmation. With this mail message, the user can recognize a practical schedule and estimated cost.

Fig. 6 shows the formats of the product database 204 and user database 205 in the user and agent terminals, which have also been explained previously. The product database 204 is installed in the user terminal, and the user database 205 is installed in the agent terminal. In practice, these databases are based on, e.g., information stored in nonvolatile storage media such as the HDD 1508 or the like in the description of Fig. 15 in each terminal.

The product database 204 stores information which pertains to apparatuses that the user uses, and user information, is formed by the registration process shown in Fig. 8, and has a directory structure corresponding to each product information. Each directory (each storage area) stores data such as a user code, icon number corresponding to a given apparatus, manufacturer name, product name, model name, serial number, date of purchase, retailer name, repair/recovery receiving center contact address, failure history information, repair history information, and the like. The product information can be identified using information unique to a given apparatus such as an icon number, serial number, or the like, but the present invention is not limited to such specific information.

The repair/recovery receiving center contact address corresponds to various possibilities: for example, the contact address of the manufacturer that manufactures apparatuses that the user may use, or that of the repair agent, retailer, or the like that affiliates with the manufacturer.

On the other hand, the user database 205 is used by the agent 103 to manage user information, and is formed for each user on the basis of user information and product information that the agent 103 receives from the retailer 101 so as to manage data. The user information contains a user code, name, address, telephone number, and e-mail address of the user, and product information that the user uses.

The product information has basically the same contents as that in the product database mentioned above. The user information can be easily identified by the user code assigned to each user 102, and directories for respective user codes can be formed. The product information can be identified using information unique to each product, and subdirectories that store data unique to apparatuses can be formed using such information.

The information unique to each product includes, e.g., an icon number, serial number, and the like. However, the present invention is not limited to such specific information, and any other kinds of information may be used as long as they can specify apparatuses. Furthermore, when only the user address information and product information (manufacturer name, product name, model name, and the like) managed by the user terminal 201 are sent from the user terminal 201 to the recovery/repair receiving agent terminal 203, the agent terminal 203 can specify a retailer based on retailer information corresponding to the product information stored in the user database 205.

### [Embodiment of Second Invention]

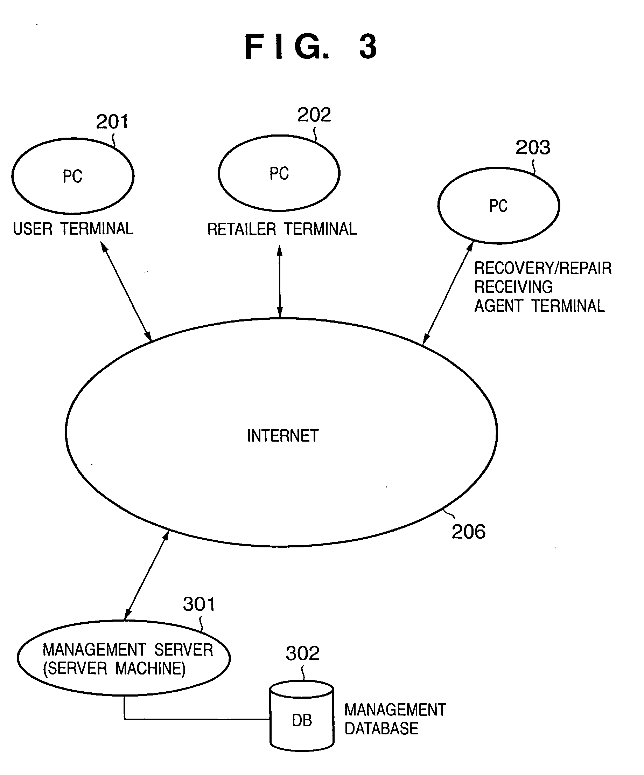

Fig. 3 is a system diagram corresponding to the second embodiment of the present invention. The arrangement shown in Fig. 3 is common to that in Fig. 2 in that the user terminal 201, retailer terminal 202, and agent terminal 203 are connected to the Internet (206), but is largely different in that the user terminal 201 and agent terminal do not have any databases unlike in the embodiment of the first invention, and a management server 301 (to be also referred to as a job request receiving apparatus or simply as a server in the present invention) is present at another location on the Internet (206).

That is, in this arrangement, a central management database 302 manages required information such as customer information, apparatus information, and the like, and the user 102 need only hold minimum required information in his or her terminal. Details of the management database 302 will be described later. Unlike in the embodiment of the first invention, the user terminal manages information of the contact address of the management server 301 (home page address information of the management server in the second embodiment), which serves as a job request contact, and the user issues various job requests (independently of models and job contents) to the management server 301.

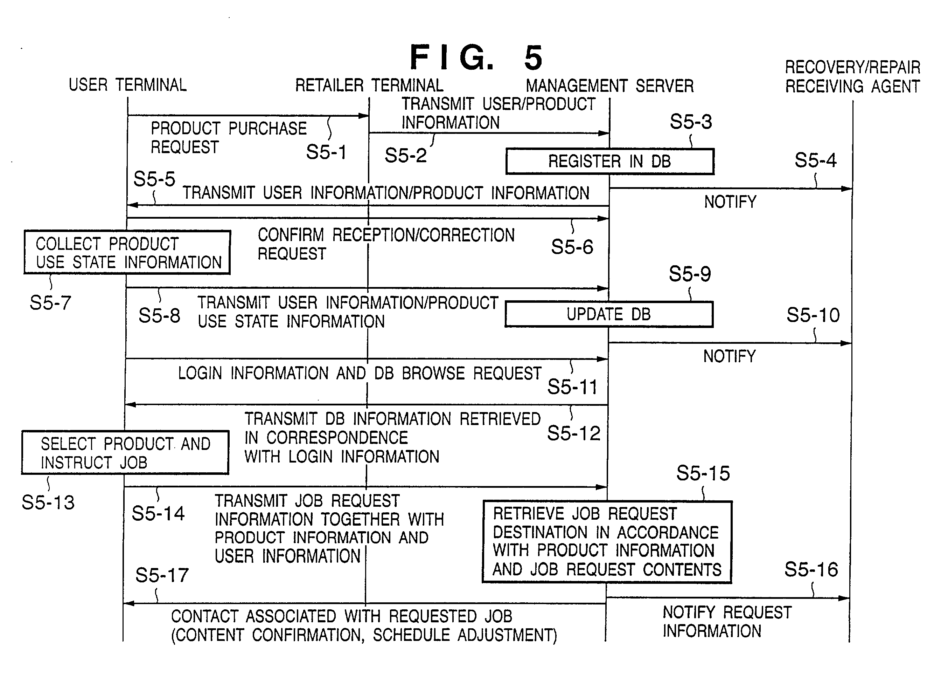

The flow of the process is as shown in Fig. 5. As in the first embodiment, the user 102 who wants to purchase an apparatus transmits purchase request information of the apparatus to the retailer terminal 202 via the user terminal 201 and the communication line (206) such as the Internet or the like (S5-1), thus purchasing the apparatus. In this case, the user 102 registers information required to specify himself or herself (e.g., the name, address, mail address, and the like) in the retailer terminal. This registration process in the retailer terminal is implemented in such a manner that an operator who is working at the retailer inputs user information sent as the e-mail message in the retailer terminal, or the retailer terminal which receives user information sent from the user terminal via the predetermined communication line (206) automatically stores it in its internal DB.

The data registered in the retailer terminal is sent from the retailer terminal 202 to the management server 301 (S5-2). The management server 301 registers the received data in the management database 302 (S5-3), and transmits a registration message to the agent terminal on the basis of apparatus information (S5-4). Upon receiving the message, the agent accesses the management database 302 to confirm the registered contents.

Alternatively, if user information is sent to the management server via a user registration window of the home page provided by the management server in S5-3, the user information to be registered is sent from the user terminal 201 to the management server without the intervention of the retailer terminal.

At the same time, the management server 301 transmits an e-mail message which contains the registered user information and apparatus information to the user terminal of the user 102 on the basis of data registered in the management database 302 (S5-5). With this process of the management server 301, the user 102 can confirm based on the contents of the received mail message if his or her registered information contains any error. Also, the user 102 may transmit a confirmation mail message to the management server 301 to confirm reception and inform if the registered information contains any error (S5-6).

If any error is found, the mail message can contain corrected information. In this case, the management server may complete the registration process upon receiving the confirmation mail message sent from the user terminal. Upon completion of the registration process, the management server may transmit a registration completion message to the agent.

Furthermore, the registered information mail message may contain the user ID and password of the home page used to access the contents of the management database 302, and the user 102 who received that mail message may access the home page to confirm the registered contents and to register information via a series of processes shown in Fig. 8.

In such case, information required to specify the user himself or herself and apparatus used are registered in and managed by the user terminal 201. Such information is required to specify the user 102 and apparatus, a job request of which is to be issued, upon executing the job request process.

The information used to specify the user includes, for example, a user code, user ID used to access the home page, and the like, but the present invention is not limited to such specific information and any other information may be used as long as they can specify the user. Likewise, the information used to specify the apparatus can use, for example, data such as an icon number, serial number, retailer information, model name, and the like, but the present invention is not limited to such specific information and any other data may be used as long as they can specify the apparatus.

In the present invention, as the mechanism associated with registration of information of the apparatus used in the user terminal, that in the first embodiment may be applied to the second embodiment. After registration, the user 102 begins to use the apparatus. In such case, the user terminal 201 collects data associated with the use state of the apparatus (S5-7). The collected information is sent as an e-mail message from the user terminal to the management server 301 together with the information that specifies the user and apparatus (S5-8). Upon receiving the e-mail message from the user terminal, the management server 301 reflects the contents of the e-mail message in the management database 302 (S5-9). The update message of the database may be periodically sent to the agent 103 (S5-10).

Note that information associated with the use state of the apparatus may be collected in such a manner that the user 102 has a mail template that describes items to be entered, completes these items, and transmits the mail message. Also, a page corresponding to such template may be prepared on the home page, and the user 102 may make entries. Of course, the user may arbitrarily describe the use state, and transmit it as a mail message.

On the other hand, apparatuses that the user 102 uses may have intercommunication functions, information may be autonomously collected mainly by a terminal such as a personal computer (user terminal 201) or the like, and the collected information may be periodically and automatically sent to the agent terminal/management server. Each apparatus may comprise, as a communication means, a wired network interface or a wireless communication means such as Bluetooth. When such automatic information collection is made, software for executing automatic collection is installed in each terminal. Such software is appended to a mail message received from the agent after the user purchased the apparatus, or the user 102 can download it from a dedicated home page. Of course, such system can be applied to the first embodiment.

The user 102 can browse the contents of the management database 302, which have been updated on the basis of information sent from the user terminal 201. The user 102 designates the URL of the corresponding home page, and accesses via a browser from his or her terminal. This access requires the user ID and password, which were acquired in the registration process, as login information, and a DB browse request is issued using them (S5-11).

Upon receiving the browse request, the management server 301 transmits database management information of the user 102 corresponding to the login information (S5-12). In such case, data to be sent is normally an HTML file but may a file with a format compatible to dedicated management software.

The window corresponding to Fig. 12 is displayed on the browser when the user accesses the home page. Hence, the user terminal 201 of the user 102 can specify an apparatus and job contents in accordance with the sequence shown in Fig. 9 (S5-13). Upon completion of predetermined operation by the user 102, the job request contents are sent to the management server 301 together with the information that specifies an apparatus and the user information (S5-14). Note that information sent in S5-14 is the one to be managed by the user terminal 201.

The information managed by the user terminal 201 may be pre-stored in a DB of the user terminal 201, or information managed by the management server 301 may be temporarily stored in the user terminal 201 when the user terminal 201 accesses the home page provided by the management server 301. The management server 301 specifies (retrieves) a job request destination in accordance with the information that specifies the apparatus, which is contained in the request information received in S5-14 (S5-15).

The management server 301 transmits information of a job request, which contains the product information, job request information, and user information received from the user terminal 201 in S5-14, to the terminal of the specified job request destination (S5-16). Also, the job request destination specified in S5-15 is sent to the user terminal 201 as an e-mail message addressed to the user 102 (S5-17).

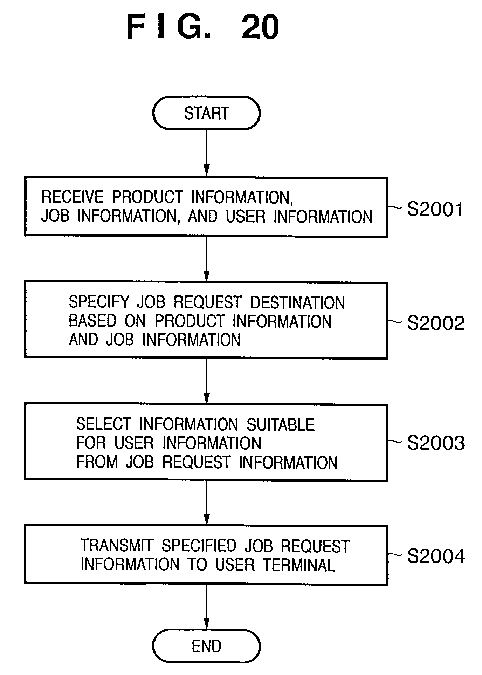

The process in S5-15 will be described in detail below using Fig. 20. The process in Fig. 20 is implemented when a CPU in the management server executes a process based on a program code stored in nonvolatile storage media (ROM, HDD, or the like).

In step S2001, a process for receiving information indicating the product information and job contents, and user information, which are sent from the user terminal 201 via the predetermined communication line (206), is executed. Note that the product information corresponds to the model, serial number, or the like in Fig. 6 in the user terminal, and the information indicating the job contents indicates the contents of the request job specified by the user terminal 201 by the same mechanism as that described using Fig. 9.

The user information corresponds to use code information the product database 204 in Fig. 6. As for user information, not only the user code but also the address, gender, age, and the like may be managed by the user terminal 201, and such managed user information may be sent to the management server 301.

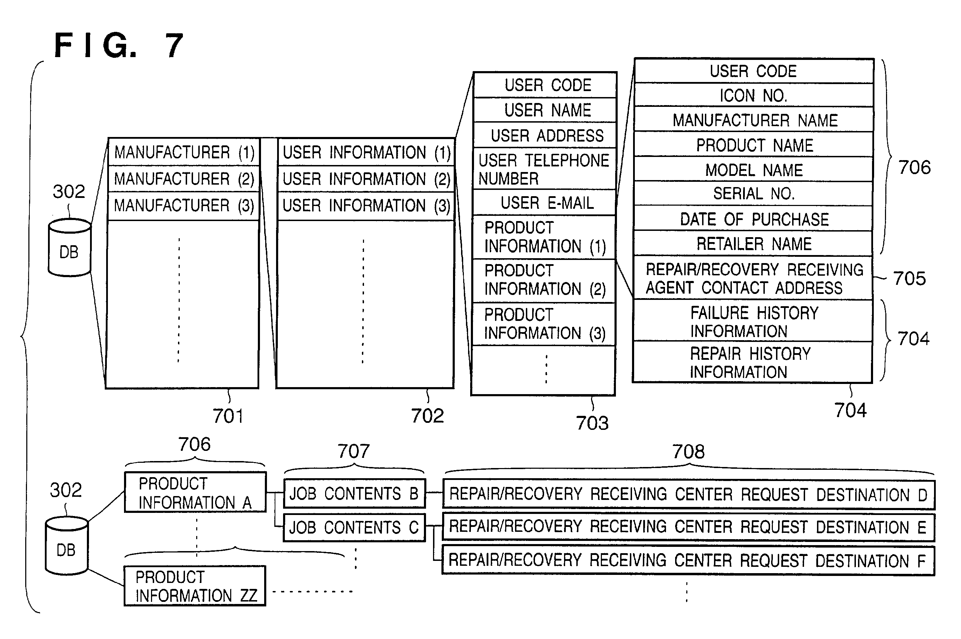

In step S2002, a job request destination is specified by the product information and job information (job identification information). This process for specifying the job request destination is implemented by searching a correspondence table among the product information, recovery request contents, and job request destination in fields 706, 707, 708, and the like in Fig. 7. Note that database contents in the fields 706, 707, and 708 in Fig. 7 are generated by sorting information in fields 701, 702, 703, and 704.

Note that the product information indicates one of the model information, serial No., retailer name, and the like, the job contents indicate, e.g., "repair" or "recovery of article", and the repair/recovery receiving center request destination is information indicating a job request destination, i.e., information of a recovery request destination specified by the model or the like and the job contents.

For example, in case of a product of model A and job request contents B, repair/recovery receiving center request destination D is specified as the job request destination. The number of agents specified from the product information and job contents is not limited to one, but a plurality of agents may be specified based on the product information and job contents. Repair/recovery receiving center request destinations E and F in Fig. 7 correspond to such agents.

In step S2003, an agent near the user's address is selected based on the address information contained in the user information, and information of the selected job request destination (the company name of the job request destination, fee, and the like) is sent to the user terminal (step S2004). Note that the process in step S2004 can be conducted in correspondence with S5-17 in Fig. 5.

Fig. 7 shows the format of the management database 302 prepared in the management server 301. The management database 302 is built based on the user information and product information sent from the retailer terminal 202. In this database, directories are roughly formed in correspondence with manufacturers, and each manufacturer information stores user information of users who use the products of that manufacturer.

Each user information contains the user code, the name, address, telephone number, and e-mail address of the user, and product information that he or she uses, and the product information contains data such as the user code, icon number corresponding to an apparatus, manufacturer name, product name, model name, serial number, date of purchase, retailer name, repair/recovery receiving center contact address, failure history information, repair history information, and the like.

Fig. 7 shows the database with the directory structure. However, the present invention is not limited to such specific database. For example, a database which can specify a retailer from the serial number or can specify retailer information from model information while each information is linked to other kinds of information may be used.

When the user issues a job request, data that specifies the user 102 and the apparatus corresponding to the job request must be sent to the management server 301, and that information can be formed by, e.g., a user code and icon number. However, the format of the information is not limited to this, and any other information may be used as long as they can specify the user 102 and apparatus. For example, the apparatus information may use a serial number, or the apparatus may be specified by retailer information and model name.

As information to be sent, identification data may be generated from user information and apparatus information to specify the apparatus. The user 102 need only manage data required to specify an apparatus corresponding to a job request in his or her terminal.

The management server in the second embodiment may be implemented in various forms, and a central server, manufacturer server, retailer server, and the like may be used. These servers will be explained below.

### (Central Site)

The central site indicates a server having a function of generally managing a plurality of manufacturers, a plurality of agents who execute jobs, a plurality of retailers, or the like. For example, such server may specify a manufacturer in accordance with model information and information indicating job contents, which are sent from the user (corresponding to S2002), and may transmit job request information to the specified manufacturer (corresponding to S2003).

### (Manufacturer Server)

The manufacturer server is provided by a manufacturer who manufactures products. When such server is used, the contact address to which the user transmits a job request corresponds to the home page address or e-mail address of the manufacturer. That is, the user terminal 201 manages that contact address information. When job request information is sent to the manufacturer server, the manufacturer server transmits that job request information to an agent (a terminal of the agent) who executes a job such as a subcontractor or the like in accordance with the product information associated with the apparatus information, and information indicating the job contents.

### (Retailer Server)

The retailer server is provided by a retailer that sells products. When such server is used, the contact address to which the user transmits a job request corresponds to the home page address or e-mail address of each retailer. That is, the user terminal 201 manages that contact address information.

When job request information is sent to the retailer server, the retailer server transmits that job request information to a manufacturer (terminal of the manufacturer) specified in accordance with the product information associated with the apparatus information, and information indicating the job contents or an agent (terminal of the agent) that executes a job the user requested.

As described above, in the mechanism of the second embodiment, the load on the user's information processing apparatus is reduced, and when the user wants to request recovery, repair, or the like of an apparatus that he or she uses, a job request can be efficiently issued regardless of job destination contacts (manufacturers, retailers corresponding to the manufacturers, and the like) of products corresponding to a plurality of manufacturers as in the first embodiment.

### [Third Embodiment]

As those of ordinary skill in the art can appreciate, the above embodiments relate to the inventions that manage the apparatus itself, but the present invention can also be applied to management of expendable information.

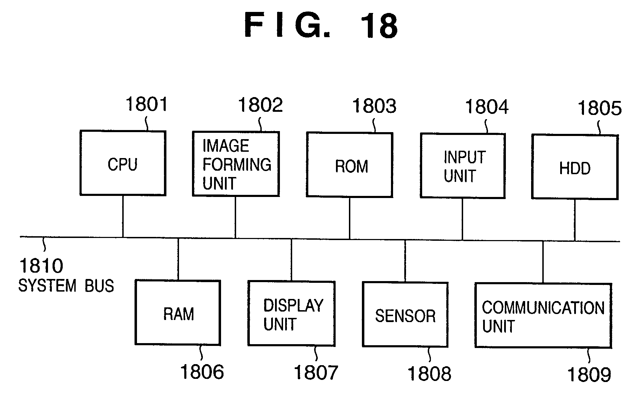

Fig. 18 is a block diagram showing the typical arrangement of an image forming apparatus in the present invention.

A CPU 1801 is a central processing unit serving as control means, and controls building components 1802 to 1809 via a system bus 1810.

Reference numeral 1802 denotes an image forming means, which has a function of converting image data externally supplied via a communication unit, or image data read by an image scanner (not shown) into a video signal, and forming an image on a predetermined recording medium.

A ROM 1803 and HDD 1805 are nonvolatile storage media, which store various data or a program code (including a control program of the present invention) to be read by the CPU. The stored program code is read by the CPU 1801, and is used to execute various processes.

An input unit 1804 is input means used to make an input according to a user's instruction, and can correspond to, e.g., a keyboard, mouse, liquid crystal touch panel, and operation buttons. A RAM 1806 temporarily stores data, and has a function of storing print data received via the communication unit and providing a main memory work area of the CPU.

A display unit 1807 is display means for displaying various kinds of display information under the control of the CPU 1801, and can correspond to a liquid crystal display, CRT, or the like as a preferred example.

A sensor 1808 is detection means for detecting the used amount/remaining amount of an expendable such as toner, ink, or the like used by the image forming apparatus, or any failure of the image forming apparatus, and has a function of reading an electrical signal or detecting a mechanical structure. Information indicating the remaining amount detected by the sensor 1808 is displayed on the display unit 1807 or is sent to an external information processing apparatus via a communication unit 1809.

The communication unit 1809 has a function of making two-way communications with an external apparatus via a predetermined communication cable or a predetermined communication network. For example, the communication unit 1809 corresponds to means having a communication function that communicates via a communication cable of, e.g., 10BASE-T or the like, and complies with a communication protocol such as RS-232C, Ethernet, or the like, or a network communication function which complies with the TCP/IP protocol or the like.

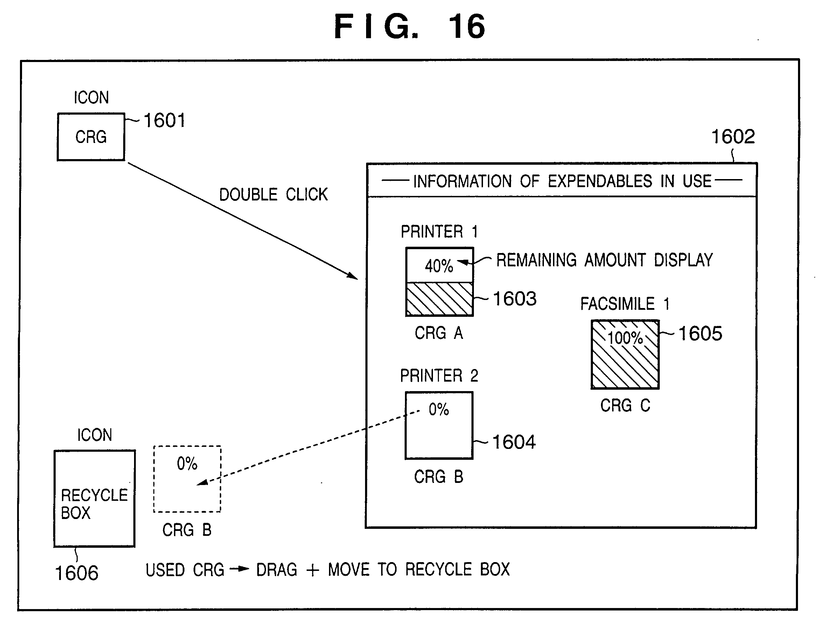

Fig. 16 shows window information displayed on management software or a home page. Fig. 16 shows a case wherein the remaining amounts of expendables (CRG) in printers 1 and 2 and facsimile 1 are displayed, and CRG2B, the remaining amount of which has reached 0%, is to be recycled.

CRG icons are displayed on the apparatus management window in the same manner as the icon of TV A500 of company A in Fig. 12. When the user double-clicks this icon to open it, an information window 1602 of expendables in use is displayed on the management window. On the information window 1602 of expendables in use, data associated with expendables such as toner, drum, or the like of apparatuses such as a printer, facsimile, and copying machine that the user 102 uses, are displayed.

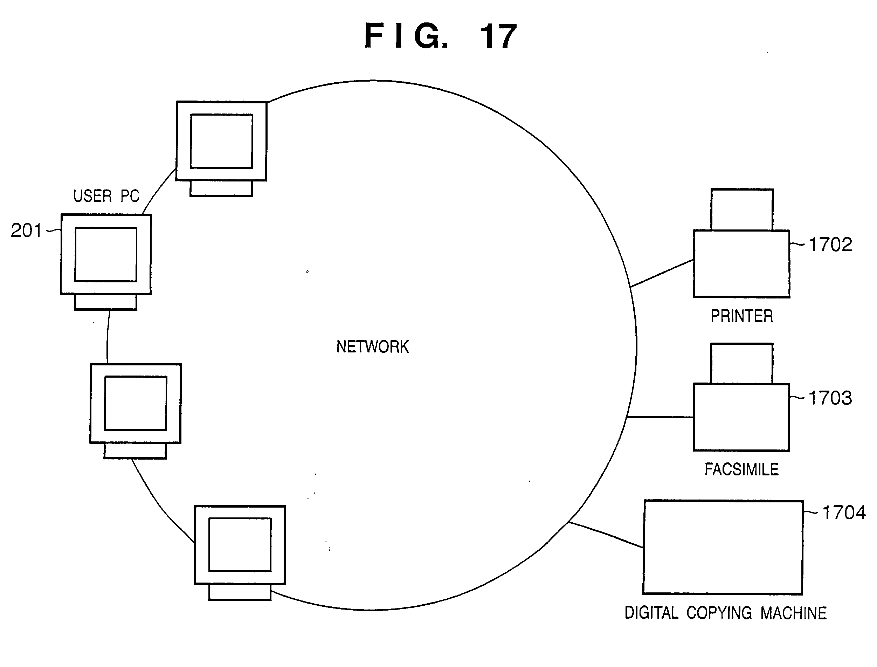

These apparatuses are connected to a network common to the user terminal 201, as shown in Fig. 17, and periodically transmit expendable information to the user terminal 201. The user terminal updates expendable data managed therein using information sent from these apparatuses.

As a display format of expendable data, in case of, e.g., toner, the remaining amount is displayed. On the other hand, in case of a drum, the use or wear-out rate based on the print count can be displayed. Note that the icon display is one display format, and the present invention is not limited to this. For example, a list table may be displayed, or other display formats may be used.

As described above, since the user can recognize the use rate and the like of expendables, when a given expendable is used up and its recycle request is required, the user can issue a recycle request by dragging and dropping the corresponding icon onto a recycle box icon, as in the first and second embodiments. More specifically, according to this embodiment, a recycle request can be easily issued using an interface which displays expendables and a recycle request job in correspondence with each other.

The drag & drop recycle request process is an example. Alternatively, an icon may be selected, and a desired process to be executed may be selected from a menu bar. Also, a recycle request check box of an apparatus list may be checked. In addition, a request process can be implemented by methods corresponding to these processes.

According to the aforementioned embodiments, the user need not positively search for and contact a recovery agent for a repair/recovery request, and the user need only make simple operation on his or her terminal to complete a job request process to the agent, thus reducing the load on the user's job request process. Furthermore, an effect of promoting the user to positively issue a repair/recovery request can be obtained, and if recovery is achieved appropriately, a decrease in waste leads to environmental conservation.

When the user positively issues a job request, the recovery efficiency can be greatly improved. Hence, since the manufacturers can efficiently manufacture apparatuses as a result of reliable recovery of recycled apparatuses, and can adequately recognize user information, they can effectively provide repair services.

According to the above embodiments, since the use states of a plurality of apparatuses of different manufacturers can be simultaneously managed, the monitor load on the user can be greatly reduced, and the monitor precision can be improved, thus providing a more comfortable use environment.

According to the present invention, the load on the user upon issuing recovery, repair, and recycle requests can be reduced. Furthermore, by providing the user with merits upon recovery, repair, and recycle, the user can be motivated to request recovery.

### [Embodiment of The Other Invention]

The present invention can be applied to a system constituted by a plurality of devices (e.g., host computer, interface, reader, printer) or to an apparatus comprising a single device (e.g., copying machine, facsimile machine)

Further, the object of the present invention can also be achieved by providing a storage medium storing program codes for performing the aforesaid processes to a computer system or apparatus (e.g., a personal computer), reading the program codes, by a CPU or MPU of the computer system or apparatus, from the storage medium, then executing the program.

In this case, the program codes read from the storage medium realize the functions according to the described embodiments and the storage medium storing the program codes constitutes the invention.

Further, the storage medium, such as a floppy disk, a hard disk, an optical disk, a magneto-optical disk, CD-ROM, CD-R, a magnetic tape, a non-volatile type memory card, and ROM can be used for providing the program codes.

Furthermore, besides aforesaid functions according to the above described embodiments are realized by executing the program codes which are read by a computer, the present invention includes a case where an OS (operating system) or the like working on the computer performs a part or entire processes in accordance with designations of the program codes and realizes functions according to the above described embodiments.

Furthermore, the present invention also includes a case where, after the program codes read from the storage medium are written in a function expansion card which is inserted into the computer or in a memory provided in a function expansion unit which is connected to the computer, CPU or the like contained in the function expansion card or unit performs a part or entire process in accordance with designations of the program codes and realizes functions of the above described embodiments.

In a case where the present invention is applied to the aforesaid storage medium, the storage medium stores program codes corresponding to the flowcharts described in the embodiments.

The present invention is not limited to the above embodiments and various changes and modifications can be made within the spirit and scope of the present invention. Therefore to apprise the public of the scope of the present invention, the following claims are made.

## Claims

1. An information processing apparatus (201) for requesting via a network (206), a predetermined job to be done for an apparatus in use, **characterized by** comprising:
specifying means (1501) for specifying the apparatus in use and the predetermined job to be done for the apparatus in use;
search means (1501) for searching for a job request destination corresponding to the apparatus in use and the predetermined job specified by said specifying means; and
transmitting means (1507) for transmitting job request information corresponding to the apparatus in use and the predetermined job specified by said specifying means to the job request destination found by said search means.

2. The apparatus (201) according to claim 1, **characterized in that** the predetermined job is a recovery job of the apparatus in use upon executing a recycle process.

3. The apparatus (201) according to claim 1, **characterized in that** the predetermined job is a repair service for the apparatus in use.

4. The apparatus (201) according to claim 1, **characterized by** further comprising display control means for displaying fee information for the job.

5. The apparatus (201) according to claim 1, **characterized by** further comprising storage means (1508) for storing retailer information of a retailer that sold the apparatus in use and apparatus information of the apparatus in use, and in that said transmitting means (1507) transmits the retailer information and apparatus information stored in said storage means (1508) in addition to the job request information.

6. The apparatus (201) according to claim 5, **characterized in that** the retailer information and apparatus information of the apparatus in use are received via a predetermined communication line (206) from a second information processing apparatus (202) provided at the retailer that sold the apparatus in use.

7. An information processing apparatus (201) for requesting, via a network, a predetermined job to be done for an apparatus in use, **characterized by** comprising:
display control means (1506) for controlling a display unit to display information associated with the apparatus in use;
first selection means for selecting the information displayed by said display control means;
second selection means for selecting the predetermined job to be done for an apparatus associated with the information selected by said first selection means;
job request information generation means (1501) for generating job request information by associating the apparatus associated with the information selected by said first selection means and the predetermined job selected by said second selection means; and
transmitting means (1507) for transmitting the job request information to an external server (301) which can communicate via a predetermined communication line (206).

8. The apparatus (201) according to claim 7, **characterized by** further comprising information collection means (1507) for collecting information associated with a use state of the apparatus in use.

9. The apparatus (201) according to claim 8, **characterized in that** said transmitting means (1507) transmits the information associated with the use state of the apparatus in use collected by said information collection means (1507) to the external server.

10. The apparatus (201) according to claim 9, **characterized in that** the external server comprises storage means (1508) for storing the information associated with the use state of the apparatus in use sent by said transmitting means (1507) and managing the stored information for each user.

11. The apparatus (201) according to claim 10, **characterized in that** said storage means (1508) also stores user information and information associated with an apparatus that the user uses and manages the stored information for each user.

12. The apparatus (201) according to claim 11, **characterized in that** the user information and information associated with the apparatus are received via the predetermined communication line (206) from a second information processing apparatus (202) provided at a retailer that sold the apparatus in use.

13. The apparatus (201) according to claim 7, **characterized in that** the predetermined job is a recovery job of the apparatus in use upon executing a recycle process.

14. The apparatus (201) according to claim 7, **characterized in that** the predetermined job is a repair service for the apparatus in use.

15. The apparatus (201) according to claim 7, **characterized in that** said display control means displays fee information for the job.

16. The apparatus (201) according to claim 15, **characterized by** further comprising: reception means for receiving the fee information sent from the server via the predetermined communication line (206), and
in that the fee information is retrieved by the server (301) on the basis of the apparatus information which has been sent to the server (301) by said transmitting means (1507), and is sent to said information processing apparatus (201) via the predetermined communication line (206).

17. A job request receiving apparatus (203) for receiving job requests of apparatuses in use corresponding to a plurality of manufacturers, **characterized by** comprising:
reception means (1507) for receiving product information and job identification information that can identify a type of job from a terminal (201) which can communicate via a predetermined communication line (206);
specifying means (1501) for specifying a job request destination on the basis of the product information and job identification information received by said reception means; and
transmitting means (1507) for transmitting job request information to the job request destination specified by said specifying means.

18. The apparatus (203) according to claim 17, **characterized in that** the product information and job identification information are input to the terminal (201) in accordance with an instruction of the user at the terminal and sent to said job request receiving apparatus (203) using a transmitter of the terminal.

19. The apparatus (203) according to claim 17 or 18, **characterized in that** said reception means receives user information, and said transmitting means (1507) transmits recovery request information containing the user information to the job request destination specified by said specifying means (1507).

20. The apparatus (203) according to claim 17 or 19, **characterized in that** the job request destination is one of a plurality of manufacturers of apparatuses in use, said specifying means specifies the job request destination by specifying one of the plurality of manufacturers in accordance with manufacturer identification information contained in the job identification information, and said transmitting means transmits the job request information to a terminal used by the manufacturer specified by said specifying means.

21. The apparatus (203) according to any one of claims 17 to 20, **characterized by** further comprising calculation means for calculating fee information for a job to be done for the apparatus in use in accordance with the apparatus in use which is specified based on specifying information, and in that said transmitting means transmits the fee information calculated by said calculation means (1501) to the terminal.

22. The apparatus (203) according to claim 19, **characterized in that** when said specifying means (1501) specifies a plurality of job request destinations, said specifying means (1501) specifies a specific job request destination from the plurality of job request destinations on the basis of the user information.

23. The apparatus (203) according to claim 1, 7, or 17, **characterized in that** the apparatus in use is an image forming apparatus (1702, 1703, 1704) or an expendable that stores a recording agent used in the image forming apparatus.

24. The apparatus (201) according to claim 1, 7, or 17, **characterized in that** the predetermined job is a recovery job of the apparatus in use upon executing a recycle process.

25. An information processing apparatus (201) **characterized by** comprising:
display control means (1506) for controlling a display unit to display information used to select an apparatus in use, and information used to select a job to be done for the apparatus; and
transmitting means (1507) for transmitting information indicating the apparatus in use and job selected using the information to a predetermined destination.

26. An information processing method for requesting via a network, a predetermined job to be done for an apparatus in use, **characterized by** comprising:
a specifying step (S9-3) of specifying the apparatus in use and the predetermined job to be done for the apparatus in use;
a search step (S9-4) of searching for a job request destination corresponding to the apparatus in use and the predetermined job specified in the specifying step; and
a transmission step (S9-8) of transmitting job request information corresponding to the apparatus in use and the predetermined job specified in the specifying step to the job request destination found in the search step.

27. An information processing method for requesting via a network, a predetermined job to be done for an apparatus in use, **characterized by** comprising:
a display control step (S9-1) of controlling a display unit to display information associated with the apparatus in use;
a first selection step (S9-3) of selecting the information displayed in the display control step;
a second selection step (S9-3) of selecting the predetermined job to be done for an apparatus associated with the information selected in the first selection step;
a job request information generation step (S9-4) of generating job request information by associating the apparatus associated with the information selected in the first selection step and the predetermined job selected in the second selection step; and
a transmission step (S9-8) of transmitting the job request information to an external server which can communicate via a predetermined communication line (206).

28. A job request receiving method for receiving job requests of apparatuses in use corresponding to a plurality of manufacturers, **characterized by** comprising:
a reception step (S4-8, S5-14) of receiving product information and job identification information that identifies a type of job from a terminal which can communicate via a predetermined communication line (206);
a specifying step (S4-9, S5-15) of specifying a job request destination on the basis of the product information and job identification information received in the reception step; and
a transmission step (S4-9, S5-16) of transmitting job request information to the job request destination specified in the specifying step.

29. An information processing method **characterized by** comprising:
a display control step (S9-1, S9-2) of controlling a display unit to display information used to select an apparatus in use, and information used to select a job to be done for the apparatus; and
a transmission step (S9-8) of transmitting information indicating the apparatus in use and job selected using the information to a predetermined destination.

30. A computer-readable information storage medium that stores a program implementing the method according to any one of claims 26 to 29.

31. An information processing program that causes computer execute the method according to any one of claims 26 to 29.
